# EUROPÄISCHE PATENTANMELDUNG

(11) **EP 3 937 056 A1**
(43) Veröffentlichungstag der Anmeldung: **12.01.2022**
(21) Anmeldenummer: 20185172.2
(22) Anmeldetag: 10.07.2020
(51) Int. Cl.: G06F 30/17, G06F 30/27, G06F 111/04, F16H 57/00, G01S 17/88

(54) **OPTISCH UNTERSTÜTZTES KONFIGURATIONSVERFAHREN FÜR EIN GETRIEBE, COMPUTERPROGRAMMPRODUKT, ERFASSUNGSGERÄT UND SYSTEM**

(71) Anmelder: Flender GmbH, 46395 Bocholt (DE)
(72) Erfinder: Düvel, Volker, 46397 Bocholt (DE); Hensel, Peter, 47198 Duisburg (DE); Leuer, Philipp, 45130 Essen (DE)
(74) Vertreter: Michalski Hüttermann & Partner Patentanwälte mbB

(57) **Zusammenfassung**

Die Erfindung betrifft ein Verfahren (100) zur Konfiguration eines Getriebes (10), das in einem vorhandenen Bauraum (30) einzubauen ist. Das Verfahren (100) umfasst einen ersten Schritt (110), in dem ein optisches Erfassen des Bauraums (30) mittels eines Erfassungsgeräts (50) erfolgt. Es folgt ein zweiter Schritt (120), in dem ein Ermitteln zumindest einer Abmessung (31) des Bauraums (30) durchgeführt wird. Das Verfahren (100) umfasst auch einen dritten Schritt (130), in dem ein Ermitteln einer Position (26) zumindest einer ersten und einer zweiten mit dem Getriebe (10) zu verbindenden Leistungswelle (22,24) erfolgt. Es schließt sich ein vierter Schritt an, in dem ein selbsttätiges Auswählen zumindest eines Getriebemodells (11), das korrespondierend zu den Leistungswellen (22,24), an den im Schritt c) erfassten Positionen (26) positionierbar ist, durchgeführt wird. Erfindungsgemäß erfolgt das Auswählen im vierten Schritt (140) anhand einer Datenbank (60), in der für eine Mehrzahl an Getriebemodellen (11) jeweils eine Mehrzahl an erzielbaren Anschlussmaßen gespeichert sind. Die Erfindung betrifft ferner ein korrespondierendes Computerprogrammprodukt (70), ein entsprechendes Erfassungsgerät (50), und ein darauf basierendes System (80).

## Beschreibung

Die Erfindung betrifft ein Verfahren zum Konfigurieren eines Getriebes, das in einen Bauraum einzubauen ist. Die Erfindung betrifft auch ein Computerprogrammprodukt, mit dem das erfindungsgemäße Verfahren durchführbar ist. Ebenso betrifft die Erfindung ein Erfassungsgerät, das zu einem System gehört, mit dem an erfindungsgemäße Verfahren umsetzbar ist.

Aus dem Dokument US 2010/0185529 A1 ist ein Verfahren bekannt, durch das Gegenstände in sogenannter Augmented Reality dargestellt werden. Dazu wird ein stillstehendes oder bewegliches Bild von einer Realumgebung generiert und mit Darstellungen von virtuellen Objekten, die den darzustellenden Gegenständen entsprechen, angereichert.

In verschiedenen Anwendungsgebieten werden ältere Getriebe durch neuere Getriebe ersetzt. Aufgrund der Langlebigkeit von Getrieben ist eine Beschaffung eines baugleichen Ersatzgetriebes nicht immer gewährleistet. Dementsprechend sind kompatible Getriebe bereitzustellen. Die Bereitstellung eines geeigneten Getriebes als Ersatz ist häufig mit hohem Aufwand verbunden. Der Erfindung liegt die Aufgabe zugrunde, eine Möglichkeit bereitzustellen, in einfacher Weise ein Getriebe zu konfigurieren, das als Ersatz für ein älteres Getriebe geeignet ist.

Die Aufgabenstellung wird durch ein erfindungsgemäßes Verfahren zum Konfigurieren eines Getriebes gelöst. Das Getriebe ist in einem vorhandenen Bauraum einzubauen, der in seinen Abmessungen und bereits vorhandene mechanische Anschlüsse im Wesentlichen vorgegeben ist. Durch die Konfiguration ist das Getriebe an derartige Gegebenheiten des vorhandenen Bauraums anzupassen. Das Verfahren umfasst einen ersten Schritt, in dem ein optisches Erfassen des Bauraums mittels eines Erfassungsgeräts erfolgt, das beispielsweise als Kamera, Smartphone oder Tablet ausgebildet sein kann. Das optische Erfassen kann dabei im Spektrum des sichtbaren Lichts, und/oder bei entsprechender Illumination im Bereich von Infrarotlicht bzw. Ultraviolettlicht erfolgen. In einem zweiten Schritt des Verfahrens erfolgt ein Ermitteln zumindest einer Abmessung des Bauraums, in den das Getriebe einzubauen ist. Die zumindest eine Abmessung dient als Referenz für weitere Schritte des Verfahrens um ein Ermitteln weiterer Maße zu unterstützen. In einem dritten Schritt erfolgt ein Ermitteln einer Position zumindest einer ersten und einer zweiten mit dem Getriebe zu verbindenden Leistungswelle, die jeweils an den Bauraum angrenzt oder in den Bauraum hineinragt. Die Position der ersten und/oder zweiten Leistungswelle wird hierbei in Bezug auf die zumindest eine Abmessung des Bauraums ermittelt, so dass die relative Ausrichtung der ersten zur zweiten Leistungswelle und deren Abstand, beispielsweise Achsabstand, ermittelbar ist. Die erste und zweite Leistungswelle können als Eingangswelle und Ausgangswelle des einzubauenden Getriebes ausgebildet sein. Die Positionen der ersten und zweiten Leistungswelle, und damit auch ihrer relativen Lage zueinander, definieren zwangsläufig zu erfüllende Randbedingungen für das einzubauende Getriebe. In einem vierten Schritt erfolgt ein selbsttätiges Auswählen eines Getriebemodells, das für das einzubauende Getriebe zu verwenden ist, dessen korrespondierende Wellenanschlüsse an den im dritten Schritt erfassten Positionen positionierbar sind. Es wird also zumindest ein Getriebemodell ausgewählt, das korrespondierend zu den Leistungswellen an den im dritten Schritt ermittelten Positionen positionierbar ist. Das selbsttätige Auswählen stellt im Wesentlichen ein Ermitteln von zumindest einem geeigneten Getriebemodell dar, das den Randbedingungen genügt, die im vorherigen Schritt ermittelt werden. Dadurch wird ein mit den Anforderungen des Bauraums kompatibles Getriebemodell ausgewählt. Das selbsttätige Auswählen des Getriebemodells erfolgt aus einer Mehrzahl von Getriebemodellen, die in einer Datenbank gespeichert sind. Je Getriebemodell ist in der Datenbank eine Mehrzahl an Anschlussmaßen gespeichert. Die Anschlussmaße umfassen beispielsweise unterschiedliche mögliche Positionen für den Wellenanschluss für die erste und/oder zweite Leistungswelle. Dadurch sind für ein Getriebemodell mehrere Varianten in der Datenbank gespeichert. Dementsprechend erlaubt das erfindungsgemäße Verfahren es, aus einer Vielzahl an möglichen Getriebemodellen und im Rahmen deren konstruktiver Variabilität aus unterschiedlichen Varianten ein geeignetes auszuwählen.

Das erfindungsgemäße Verfahren basiert mit der Position der ersten und zweiten Leistungswelle auf einer einfach zu ermittelnden Größe bzw. Abmessung, die im Wesentlichen automatisch mittels eines geeigneten Erfassungsgeräts präzise messbar ist. Dazu kann das Erfassungsgerät zum Durchführen eines Eingabedialogs mit einem Benutzer ausgebildet sein, bei dem ein Benutzer zum optischen Erfassen von geeigneten Abschnitten des Bauraums angeleitet wird. Erfassungsgeräte mit hinreichender Rechenleistung, die ein räumliches Erfassen des Bauraums bei ausreichender Messgenauigkeit bieten, sind einfach und wirtschaftlich verfügbar. Das optische Erfassen vermeidet die aufwendige Handhabung komplexer und gegebenenfalls ungenauer Messmittel. Die für die Auswahl des Getriebemodells notwendigen Daten werden so in geeigneter Form bereitgestellt, um eine Datenbank mit Getriebemodellen schnell zu durchsuchen. Insbesondere sind auch mehrere geeignete Getriebemodelle für das einzubauende Getriebe ermittelbar, was die Nutzung zusätzlicher technischer Vorteile gestattet. Die technische Anpassungsfähigkeit von Getriebebaureihen kann so weiter ausgeschöpft werden.

In einer Ausführungsform des beanspruchten Verfahrens wird der vierte Schritt auch basierend auf einer einstellbaren Funktionsangabe des Getriebes durchgeführt, die zu Getriebedaten des Getriebes gehören. Die Funktionsangabe kann beispielsweise durch eine Eingabe des Benutzers vorgegeben werden. Zu den Funktionsangaben des Getriebes können ein Nenndrehmoment, ein Spitzendrehmoment, eine Nenndrehzahl, ein Anwendungsfaktor, ein Anfahrrampe, eine Motor-Leistungskurve, eine Herkunftsangabe, eine Bauartangabe, ein Wellendurchmesser, eine Lebensdauer, eine Ölmenge, dessen Gewicht und/oder eine Kombination hiervon gehören. Basierend auf der zumindest einen Funktionsangabe des Getriebes ist der vierte Schritt, in dem das Getriebemodell ausgewählt wird, zielgerichteter durchführbar. Derartige Funktionsangaben erlauben ein schnelles Durchsuchen und Filtern der Datenbank nach infrage kommenden Getriebemodellen. Insbesondere wird gegenüber dem Erfassen der Positionen der ersten und zweiten Leistungswelle der Rechenaufwand für die Verarbeitung der Daten aus der optischen Erfassung eingespart. Ein Vorgeben der einstellbaren Funktionsangabe des Getriebes zumindest vor dem Ermitteln der Positionen der ersten und zweiten Leistungswelle erlaubt es, die Datenbank vorzusortieren und so den vierten Schritt beschleunigt durchzuführen.

In einer weiteren Ausführungsform des beanspruchten Verfahrens kann im vierten Schritt das zumindest eine Getriebemodell unter Berücksichtigung einer Montagezusatzkomponente auswählt werden. Die Montagezusatzkomponente kann beispielsweise als Kupplung, Adapter, Riementrieb, Kettentrieb, Flanschwelle, Rücklaufsperre, Sensorik, Heizelement, Kühlelement und/oder Anbauflansch ausgebildet sein. Mittels der Montagezusatzkomponente ist ein Getriebemodell an eine anderweitig nicht erreichbare Position der ersten und/oder zweiten Leistungswelle anpassbar. Das beanspruchte Verfahren ist somit in der Lage, auch solche Getriebemodelle als Möglichkeit für das einzubauende Getriebe zu berücksichtigen, für die geeignete Anpassungsmöglichkeiten, also Montagezusatzkomponenten, verfügbar sind. Dadurch kann beispielsweise das Erfüllen einer Funktionsangabe des Getriebes vor dem Erfüllen der Anschlussbemaßungen vorrangig behandelt werden, ohne die Funktionalität des einzubauenden Getriebes zu beeinträchtigen. Auch hierdurch ist die Variabilität von Getriebebaureihen und deren Montagezusatzkomponenten weiter ausschöpfbar.

Darüber hinaus kann im dritten Schritt ein Durchmesser der ersten und/oder zweiten Leistungswelle im Bauraum ermittelt.

Alternativ oder ergänzend wird im dritten Schritt eine Position zumindest eines Fußlochs im Bauraum für das Getriebe ermittelt. Durch das Fußloch ist die Position einer Fixierung für das einzubauende Getriebe vorgegeben, wodurch sich für die geeigneten Getriebemodelle eine Einschränkung ergeben kann. Gleichermaßen können im dritten Schritt auch eine Höhe, Breite oder Länge eines Getriebemodells berücksichtigt werden, und/oder ein Wellendurchmesser oder ein Fußlochabstand. Das beanspruchte Verfahren ist somit in der Lage, weitere einbaurelevante Größen selbsttätig zu verarbeiten um eine anforderungsgerechte Auswahl des Getriebemodells durchzuführen.

Des Weiteren kann im beanspruchten Verfahren ein Durchmesser zumindest einer Leistungswelle und/oder des Fußlochs im Bauraum mittels einer Normteilangabe erfolgen. Die Normteilangabe ist dabei optisch und/oder elektronisch auslesbar. Eine Normteilangabe kann beispielsweise eine Angabe über eine Größe der jeweiligen Leistungswelle sein, wie unter anderem einer IEC-Angabe für Motorwellen. Die Normteilangabe kann auch jegliche andere Angabe sein, die für eine Abmessung des mindestens einen Fußlochs oder einer der Leistungswellen eine Vorgabe definiert. Die Normteilangabe ist optisch und/oder elektronisch auslesbar. Eine optisch auslesbare Normteilangabe kann als Beschriftung, Prägung, QR-Code oder Etikett ausgebildet sein, das mittels eines Erfassungsgeräts wie beispielsweise einem Smartphone lesbar ist. Unter einer elektronisch auslesbaren Normteilangabe ist beispielsweise ein RFID-Etikett, ein Chip oder eine Datenverbindung mit einer Kommunikationsschnittstelle, insbesondere einer IoT-Funkverbindung, zu verstehen.

In einer weiteren Ausführungsform des beanspruchten Verfahrens kann im vierten Schritt, das Getriebemodell an einen Benutzer ausgegebenen werden, das in zumindest einem Parameter einem vom Benutzer wählbaren Kriterium entspricht. Unter dem Kriterium ist dabei jegliche Eigenschaft eines Getriebemodells zu verstehen, die für dessen Auswahl technisch relevant sein kann. Das vom Benutzer wählbare Kriterium kann ein Getriebetyp sein, insbesondere ob es sich beim auszuwählenden Getriebemodell um ein Planetengetriebe, ein Stirnradgetriebe, Kegelstirnradgetriebe oder ein Hypoidgetriebe handelt. Alternativ oder ergänzend kann das Kriterium eine Angabe über einen verwendeten Schmierstoff oder über eine Kühlungsart sein, oder über damit kombinierbare Anbauteile oder Kupplungen. Ferner kann auch ein Minimalwert oder ein Maximalwert für ein Nenndrehmoment des auszuwählenden Getriebetyps sein. Durch ein Vorgeben eines Kriteriums durch den Benutzer können frühzeitig Getriebemodelle ausgeschlossen werden, und so der Rechenaufwand beim Durchführen des beanspruchten Verfahrens reduziert werden. Dementsprechend wird die Praxistauglichkeit des beanspruchten Verfahrens weiter gesteigert.

Ferner können Getriebemodelle, die in der Datenbank gespeichert sind, zumindest einen parametrisierten Achsabstand und/oder einen parametrisierten Durchmesser der ersten und/oder zweiten Leistungswelle aufweisen. Unter einer Parametrisierung ist beispielsweise eine CAD-Modellierung basierend auf Proportionen statt auf absoluten Abmessungen zu verstehen. Der parametrisierte Achsabstand ist dementsprechend auf einen im Wesentlichen beliebigen Wert einstellbar. Analog sind auch die Durchmesser der ersten und/oder zweiten Leistungswelle im Wesentlichen beliebig einstellbar. Folglich sind in der Datenbank, unter Berücksichtigung der Randbedingungen der Parametrisierung, weitestgehend frei anpassbare Getriebemodelle gespeichert. Dementsprechend ist im vierten Schritt des Verfahrens ein Getriebemodell auswählbar, das in besonders vorteilhafter Weise die geforderten Randbedingungen erfüllt. Dementsprechend werden dem beanspruchten Verfahren mehr Getriebemodelle zur Verfügung gestellt, und damit der mögliche Lösungsraum erweitert. Das beanspruchte Verfahren ist daher zuverlässig dazu geeignet, einem Benutzer zumindest ein geeignetes Getriebemodell zu ermitteln und vorzuschlagen. Derart parametrisch konstruierte Getriebe sind schnell berechenbar, so dass das auszuwählende Getriebemodell schon früh besonders detailliert ermittelbar und darstellbar ist.

Des Weiteren können der erste und zweite Schritt mittels eines Erfassungsgeräts durchgeführt werden. Das Erfassungsgerät kann als tragbares Gerät mit einer Kamera und Hardware zur Bilderkennung und Datenverarbeitung ausgebildet sein. Beispielsweise kann das Erfassungsgerät als Smartphone, Tablet, Notebook, Datenbrille, auch Smart Glasses genannt, oder als dezidiertes Servicegerät ausgebildet sein. Alternativ oder ergänzend kann der vierte Schritt mittels einer übergeordneten Auswertungseinheit durchgeführt werden. Unter einer übergeordneten Auswertungseinheit ist eine Vorrichtung zu verstehen, die dazu ausgebildet ist, Bilddaten, die vom Erfassungsgerät erzeugt werden und/oder vom Erfassungsgerät generierte Daten zu verarbeiten um das Auswählen des zumindest einen Getriebemodells im vierten Schritt zumindest zu unterstützen. In der übergeordneten Auswertungseinheit kann auch die Datenbank implementiert sein, in der die Getriebemodelle gespeichert sind. Dazu kann die übergeordnete Auswertungseinheit beispielsweise als einzelner Computer, als Cluster, als Server oder als Computer-Cloud ausgebildet sein. Der Rechenaufwand für das beanspruchte Verfahren ist dementsprechend auf ein Erfassungsgerät und eine übergeordnete Auswertungseinheit aufteilbar. Dadurch ist das beanspruchte Verfahren schnell durchführbar, was dessen Einsatztauglichkeit weiter steigert.

Weiter alternativ oder ergänzend kann der dritte Schritt, in dem die Position der ersten und zweiten Leistungswelle erfasst wird, die mit dem Getriebe zu verbinden sind, mittels des Erfassungsgeräts oder der übergeordneten Auswertungseinheit durchgeführt werden. Ein Durchführen des dritten Schritts mittels des Erfassungsgeräts erlaubt es, eine Datenmenge zu reduzieren, die an die übergeordnete Auswertungseinheit zu übertragen ist. Die Anforderungen eine bereitzustellende Datenverbindung zwischen dem Erfassungsgerät und der übergeordneten Auswertungseinheit werden dadurch reduziert. Erfassungsgeräte, die mittels Software erfasste Kameradaten auf Abmessungen und Lageerkennung erlauben, sind in zunehmendem Maße verfügbar und bieten in einfacher Weise eine ausreichende Präzision für das beanspruchte Verfahren. Ein Ausführen des dritten Schritts mittels der übergeordneten Auswertungseinheit erlaubt eine präzisere Auswertung und Erkennung von Kameradaten, was wiederum ein zielgerichteteres Auswählen eines Getriebemodells erlaubt. Dementsprechend wird die Treffsicherheit, und damit wiederum die Einsatztauglichkeit des beanspruchten Verfahrens gesteigert. Weiter alternativ oder ergänzend kann der dritte Schritt auch in Teilschritte separiert mittels des Erfassungsgeräts im Zusammenspiel mit der übergeordneten Auswertungseinheit durchgeführt werden. Das beanspruchte Verfahren ist dadurch in einfacher in die Leistungsfähigkeit künftiger Erfassungsgeräte anpassbar.

Ferner kann der vierte Schritt, in dem das zumindest eine Getriebemodell ausgewählt wird, mittels einer Künstlichen Intelligenz durchgeführt werden. Unter einer Künstlichen Intelligenz ist beispielsweise ein neuronales Netz zu verstehen, das mittels Daten von abgeschlossenen Fällen, in denen ein Getriebemodell ausgewählt worden ist, trainierbar ist. Eine solche Künstliche Intelligenz ist dazu geeignet, durch Zugewinn an Erfahrung den vierten Schritt schneller und zielgerichteter durchzuführen. Hierdurch wird die Zuverlässigkeit des beanspruchten Verfahrens gesteigert. Zu diesem Zweck kann die Künstliche Intelligenz beispielsweise als sogenanntes Neuronales Netz ausgebildet sein.

Die zugrundeliegende Aufgabenstellung wird auch durch ein erfindungsgemäßes Computerprogrammprodukt gelöst, das zu einem Auswählen eines Getriebemodells aus einer Datenbank ausgebildet ist. Das Computerprogrammprodukt ist zu einem Empfangen und Verarbeiten von Bilddaten ausgebildet, die beispielsweise durch eine Kamera bereitgestellt werden können. Des Weiteren ist das Computerprogrammprodukt dazu ausgebildet, ein ausgewähltes Getriebemodell auszugeben, beispielsweise durch ein Anzeigen auf einem Bildschirm. Erfindungsgemäß ist das Computerprogrammprodukt dazu ausgebildet, zumindest eine der oben dargestellten Ausführungsformen des beanspruchten Verfahrens auszuführen. Das Computerprogrammprodukt kann dazu in Software ausgebildet sein, oder festverdrahtet, also in einem Chip, einem FPGA oder einem Prozessor, oder einer Kombination hieraus. Dementsprechend ist das Computerprogrammprodukt funktionell teilbar, wobei die einzelnen Teile je nach Eignung per Software oder direkt per Hardware, also festverdrahtet, durchführbar sind. Das Computerprogrammprodukt kann ferner monolithisch oder modular ausgebildet sein. Ein monolithisches Computerprogrammprodukt ist mit minimalem Kommunikationsaufwand auf einer einzigen Hardwareplattform durchführbar. Ein modulares Computerprogrammprodukt wiederum erlaubt es, einzelne Funktionen anforderungsgerecht durchzuführen. Beispielsweise kann eine Aufbereitung von Bilddaten mittels eines Smartphones schnell und einfach durchgeführt werden. Das Computerprogrammprodukt kann ferner auf einem Speichermedium, wie beispielsweise einem optischen Speichermedium, einem USB-Laufwerk oder einer Festplatte, als Downloadpaket auf einem Server, oder als Dienstleistung, sogenannte Softwareas-a-Service, verkörpert sein und vorgehalten werden.

Gleichermaßen wird die zugrundeliegende Aufgabenstellung durch ein erfindungsgemäßes Erfassungsgerät gelöst, das dazu ausgebildet ist, zumindest eine der oben dargestellten Ausführungsformen des beanspruchten Verfahrens zumindest teilweise durchzuführen. Dazu kann das Erfassungsgerät beispielsweise mit einem Computerprogrammprodukt, wie zuvor skizziert, ausgestattet sein. Insbesondere kann das Erfassungsgerät als Kamera, Smartphone oder Tablet ausgebildet sein.

Ferner wird die dargestellte Aufgabenstellung durch ein erfindungsgemäßes System gelöst, das zu einem optischen Erfassen eines Bauraums für ein Getriebe ausgebildet ist. Zum System gehören auch eine Datenverbindung und eine übergeordnete Auswertungseinheit. Das System ist erfindungsgemäß dazu ausgebildet, ein Verfahren nach zumindest einer der oben beschriebenen Ausführungsformen auszubilden. Dazu kann das System ein Computerprogrammprodukt und/oder ein Erfassungsgerät umfassen, wie oben skizziert.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine erste Ausführungsform des beanspruchten Verfahrens;
- FIG 2: eine Schrägansicht einer Ausführungsform eines auszuwählenden Getriebes;
- FIG 3: schematisch einen Aufbau einer Datenbank zur Durchführung einer Ausführungsform des beanspruchten Verfahrens;
- FIG 4: einen schematischen Ablauf einer zweiten Ausführungsform des beanspruchten Verfahrens.

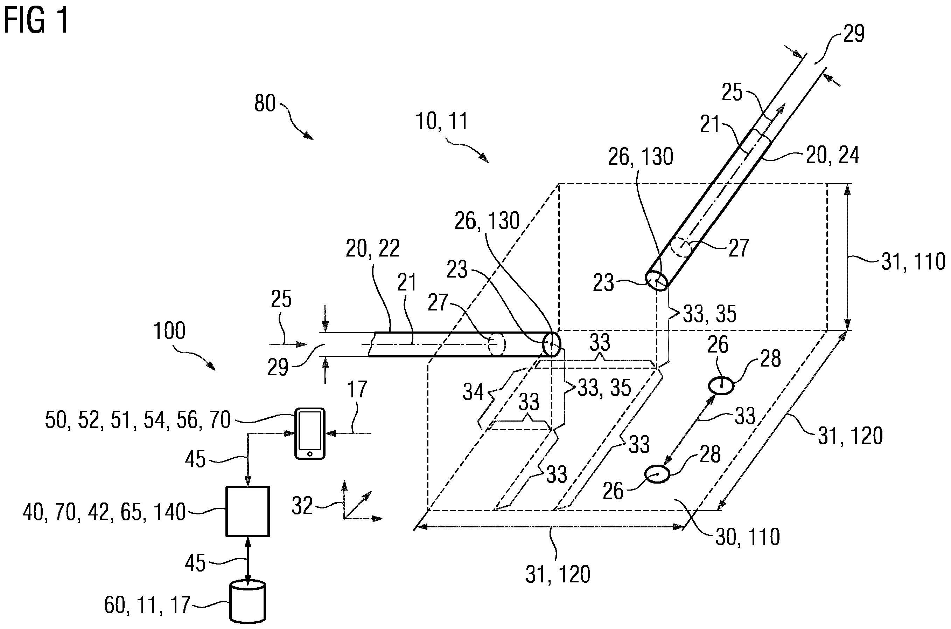

In FIG 1 ist schematisch eine erste Ausführungsform des beanspruchten Verfahrens 100 zum Auswählen eines Getriebes 10 dargestellt. Im Einzelnen zeigt FIG 1 einen Bauraum 30, der sich entlang von Raumachsen 32 erstreckt und durch seine Abmessungen 31 entlang der Raumachsen 32 definiert ist. Für das Getriebe 10 wird mittels des Verfahrens 100 ein Getriebemodell 11 ausgewählt, das im Bauraum 30 einbaubar ist. In einem ersten Schritt 110 erfolgt ein optisches Erfassen des Bauraum 30 mittels eines Erfassungsgeräts 50, das als Smartphone 51 ausgebildet ist und über eine Kamera 52 und eine Ausgabeeinheit 54 verfügt, die als Bildschirm 56 ausgebildet ist. Dazu wird der Bauraum 30 im Wesentlichen mittels des Erfassungsgeräts 50 aufgenommen. In einem zweiten Schritt 120 erfolgt ein Ermitteln zumindest einer Abmessung 31 des Baumraums 30. Dazu werden Bilddaten, die für dem Bauraum 30 im ersten Schritt 110 erfasst sind, mittels des Erfassungsgeräts 50 und/oder einer Auswertungseinheit 40 ausgewertet, wobei die Auswertungseinheit 40 als übergeordnete Auswertungseinheit 42 ausgebildet ist. Das Erfassungsgerät 50 und/oder die Auswertungseinheit 40 sind dazu mit einem geeigneten Computerprogrammprodukt 70 ausgestattet und sind über eine Datenverbindung 45 miteinander gekoppelt.

Es erfolgt ein dritter Schritt 130, in dem die im ersten Schritt 110 erfassten Bilddaten weiter ausgewertet werden, um jeweils eine Position 26 von zwei Leistungswellen 20 zu ermitteln. Die Leistungswellen 20 ragen in den Bauraum 30 hinein, was in FIG 1 durch die entsprechende Spur 27 versinnbildlicht ist. Die Leistungswellen 20 sind jeweils um ihre Drehachsen 21 drehbar ausgebildet. Eine erste Leistungswelle 22 dient dazu, eine Antriebsleistung 25 dem auszuwählenden Getriebe 10 zuzuführen, und eine zweite Leistungswelle 24 dient dazu, die Antriebsleistung 25 aus dem auszuwählenden Getriebe 10 abzuführen. Die Position 26 der ersten Leistungswelle 22 ist durch die Lage ihrer Stirnfläche 23 definiert. Bezogen auf den Bauraum 30 weist die erste Leistungswelle 22 entlang den Raumachsen 32 Koordinaten 33 auf. Entlang einer vertikalen Koordinate 33 wird eine Achshöhe 35 der ersten Leistungswelle 22 definiert. Analog zur ersten Leistungswelle 22 ist auch die Position 26 der zweiten Leistungswelle 24 definiert und in FIG 1 dargestellt. Darüber hinaus ist im dritten Schritt 130 auch jeweils ein Leistungswellendurchmesser 29 der ersten bzw. zweiten Leistungswelle 22, 24 erfassbar. Durch die Positionen 26 der ersten und zweiten Leistungswelle 22, 24 wird die Anzahl an Getriebemodellen 11, die in den Bauraum 30 einbaubar ist, beeinflusst. Eine Mehrzahl an Getriebemodellen 11, aus denen ein geeignetes Getriebemodell 11 auswählbar ist, ist zusammen mit korrespondierenden Getriebedaten 17 in einer Datenbank 60 gespeichert, die mit der Auswertungseinheit 40 über eine Datenverbindung 45 verbunden ist. Ferner sind Positionen 26 von Fußlöchern 28 im dritten Schritt 130 erfassbar, die im Bauraum 30 ausgebildet sind. Das Erfassen der Positionen 26 der Fußlöcher 28 basiert gleichermaßen auf Koordinaten 33 entlang der Raumachsen 32. Auch durch die Positionen 26 der Fußlöcher 28 wird beeinflusst, welches Getriebemodell 11 im Bauraum 30 einbaubar ist. Darüber hinaus sind Getriebedaten 17 als Benutzereingabe in das Erfassungsgerät 50 eingebbar, beispielsweise durch einen Benutzer.

In einem vierten Schritt 140 erfolgt ein selbständiges Auswählen von zumindest einem Getriebemodell 11, das für den Einbau im Bauraum 30 geeignet ist. Das Auswählen erfolgt basierend auf zumindest den ermittelten Abmessungen 31 des Bauraums 30. Ebenso können die Positionen der 26 der ersten und zweiten Leistungswelle 22, 24, zumindest ein Leistungswellendurchmesser 29, und/oder Getriebedaten 17 berücksichtigt werden. Dazu ist die Auswertungseinheit 40 mit einem Computerprogrammprodukt 70 ausgestattet, durch das eine Künstliche Intelligenz 65 umfasst. Durch die Künstliche Intelligenz 65, die beispielsweise als neuronales Netz ausgebildet sein kann, erfolgt aus der Vielzahl an Getriebemodellen 11 die Auswahl von zumindest einem geeigneten Getriebemodell 11 für ein Einbau in den Bauraum 30. Das Resultat des vierten Schritts 140 ist ferner mittels des Erfassungsgeräts 50 anzeigbar. Das Erfassungsgerät 50 und die Auswertungseinheit 40 bilden zusammen ein System 80 zum Erfassen des Bauraums 30 und zum Konfigurieren eines Getriebes 10 durch Auswählen eines geeigneten Getriebemodells 11.

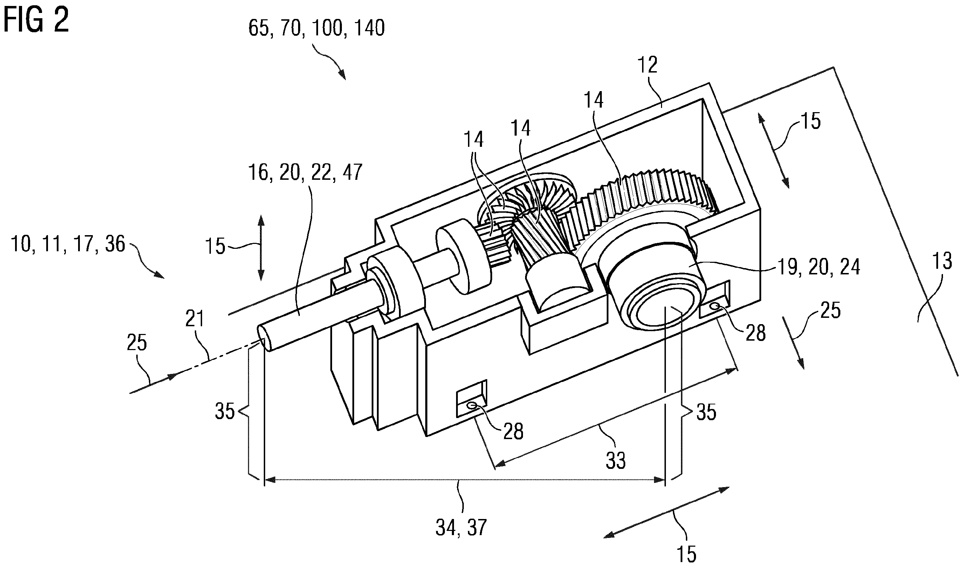

Eine Ausführungsform eines auszuwählenden Getriebes 10 ist in FIG 2 dargestellt. Das Getriebe 10 ist ein Getriebemodell 11, das als Kegelstirnradgetriebe ausgebildet ist. Ferner ist das Getriebemodell 11 durch unterschiedliche Getriebedaten 17 definiert, zu denen auch Funktionsangaben gehören. Das Getriebe 10 weist eine Welle 20 auf, die über eine nicht näher gezeigte Kupplung 16 über eine Montagezusatzkomponente 47, wie beispielsweise einer Feder, mit einer Welle 20, insbesondere mit einer ersten Leistungswelle 22 drehmomentübertragend verbindbar ist. Die erste Leistungswelle 22 führt so dem Getriebe 10 eine Antriebsleistung 25 zu. Um die Montierbarkeit des Getriebes 10 mit der ersten Leistungswelle 22 zu gewährleisten, ist das Getriebe 10 mittels eines Verfahrens 100, wie exemplarisch in FIG 1 gezeigt, derart auszuwählen, dass eine Achshöhe 35 mit der ersten Leistungswelle 22 korrespondiert. Die Achshöhe 35 ist im Wesentlichen ein vertikaler Abstand zwischen einem Boden 13 und der Drehachse 21 der ersten Leistungswelle 22 bzw. der entsprechenden Welle 20 des Getriebes 10 entspricht. Des Weiteren umfasst das Getriebe 10 ein Gehäuse 12, das durch seine Abmessungen 15 definiert ist. Im Gehäuse 12 ist eine Mehrzahl an Zahnrädern 14 angeordnet, durch die die zugeführte Antriebsleistung 25 zu einer weiteren Welle 20 geleitet wird, die mit einer zweiten Leistungswelle 24, wie beispielsweise in FIG 1 gezeigt, verbindbar ist. Die Welle 20 ist dazu mit einem Nabenanschluss 19 versehen, in den die zweite Leistungswelle 24 drehmomentübertragend einsteckbar ist. Auch der Nabenanschluss 19 ist, korrespondierend zur Welle 20, die mit der ersten Leistungswelle 22 zu verbinden ist, durch ihre Achshöhe 35 charakterisiert. Über den Nabenanschluss 19 und die zweite Leistungswelle 24 wird die zugeführte Antriebsleistung 25 aus dem Getriebe 10 abgeführt. Darüber hinaus weist das Getriebe 10 zwischen der Welle 20, die mit der Kupplung 16 verbindbar und/oder dem Montagezusatzkomponente 47 versehen ist, und dem Nabenanschluss 19 einen Achabstand 34 auf. Der Achsabstand 34 korrespondiert bei einem auszuwählenden Getriebe 10 mit den entsprechenden Positionen 26 der ersten und zweiten Leistungswelle 22, 24, wie in FIG 1 gezeigt. Darüber hinaus weist das Getriebe 10 Fußlöcher 28, die bei einem auszuwählenden Getriebe 10 mit Fußlöchern 28 korrespondieren, mit denen das Getriebe 10 zu befestigen ist. Das Getriebemodell 11 gemäß FIG 2 ist als parametrisiertes Getriebemodell 11 ausgebildet. Dementsprechend sind jeweils die Achshöhen 35, der Achabstand 34 und der Abstand zwischen den Fußlöchern 28, also deren entsprechenden Koordinaten 33, nicht als feste Werte, sondern als parametrisierter Achsabstand 37 gespeichert. Die Achshöhen 35, der Achabstand 34 und die Koordinaten 33 der Fußlöcher 28 sind über Konstruktionsparameterregeln 36, also betragsmäßige Relationen, miteinander verknüpft, so dass das Getriebemodell 11 im Rahmen dieser Intervalle variierbar ist. Dementsprechend ergeben sich auch veränderliche Getriebedaten 17, wozu auch veränderliche Funktionsangaben gehören. Die Achshöhen 35, der Achsabstand 34 und die Koordinaten 33 der Fußlöcher 28 sind in Bezug auf die Positionen 26 der ersten und/oder zweiten Leistungswelle 22, 24 variierbar. In zumindest einer Ausführungsform des beanspruchten Verfahrens 100 ist im vierten Schritt 140 zumindest ein Getriebemodell 11 wie in FIG 2 auswählbar, das nach einer entsprechend Anpassung zumindest einer der parametrisierten Achshöhen 35, des parametrisierten Achsabstand 34 und/oder der Koordinaten 33 der Fußlöcher 28 für den Einbau im Bauraum 30 geeignet ist. Dazu kann das Verfahren 100 mittels eines Computerprogrammprodukts 70 durchgeführt werden, das eine künstliche Intelligenz 65 umfasst.

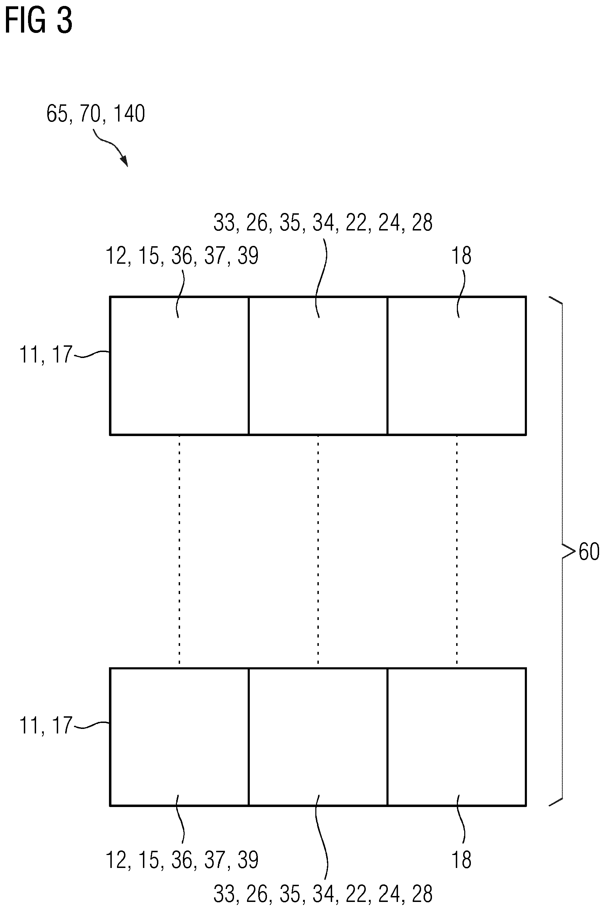

In FIG 3 ist schematisch ein Aufbau einer Datenbank 60 gezeigt, in der eine Mehrzahl an Getriebemodellen 11 gespeichert sind, aus denen im beanspruchten Verfahren 100 eines auszuwählen ist. Jedes Getriebemodell 11 ist in FIG 3 schematisch durch eine Zeile dargestellt, die drei unterschiedliche Kategorien von Getriebedaten 17 umfassen. Eine erste Kategorie umfasst Abmessungen 15 eines jeweiligen Gehäuses 12, Konstruktionsparameterregeln 36, zumindest einen parametrisierten Achsabstand 37 und einen parametrisierten Durchmesser 39 für eine Welle 20 oder Nabenanschluss 19, die mit einer Leistungswelle 22, 24 zu verbinden sind. Die bezeichnete erste Kategorie umfasst im Wesentlichen Informationen, aus denen weitere Getriebedaten 17 ableitbar sind. Die Getriebedaten 17 umfassen auch eine zweite Kategorie an Informationen, zu denen Koordinaten 33 von Fußlöchern 28 und/oder Positionen 26 von Leistungswellen 22, 24 gehören. Ebenso gehört zur zweiten Kategorie ein Achsabstand 34, der sich basierend auf dem parametrisierten Achsabstand 37 ergibt, und eine Achshöhe 35 für das Getriebemodell 11 bzw. das Getriebe 10. Die Getriebedaten 17 umfassen auch eine dritte Kategorie an Informationen, unter die Funktionsangaben 18 des Getriebemodells 11 fallen. Unter einer Funktionsangabe 18 ist beispielsweise ein Nenndrehmoment, ein Spitzendrehmoment, eine Nenndrehzahl, ein Anwendungsfaktor, ein Anfahrrampe und/oder eine Kombination hiervon zu verstehen. Die dritte Kategorie umfasst im Wesentlichen Angaben, die nicht unmittelbar auf die Geometrie des Getriebemodells 11 bezogen sind, sondern auch auf weitergehenden technischen Konsequenzen, die sich aus einer Auswahl von geometrischen Daten des Getriebemodells 11 ergeben können.

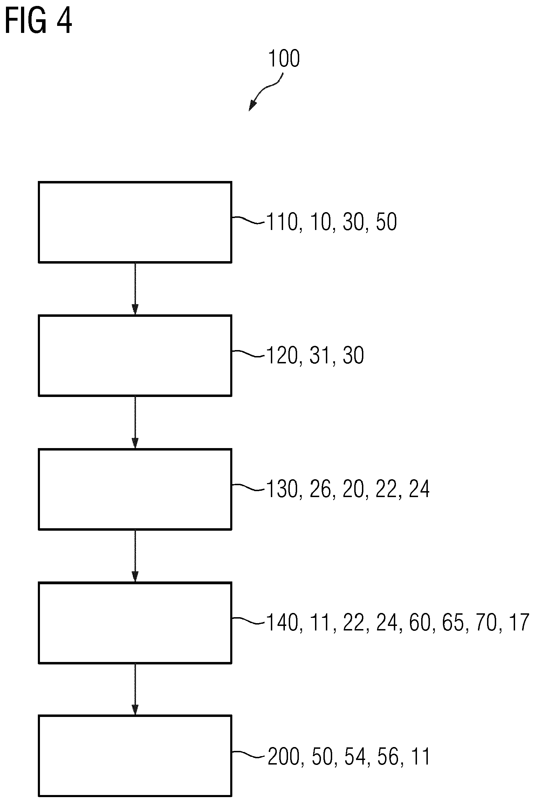

Ein Ablauf einer Ausführungsform des beanspruchten Verfahrens 100 ist schematisch in FIG 4 dargestellt. In einem ersten Schritt 110 des Verfahrens 100 erfolgt ein optisches Erfassen eines Bauraums 30 mittels eines Erfassungsgeräts 50, in den ein Getriebe 10 einzubauen ist. Das Erfassungsgerät 50 verfügt dazu über eine geeignete Kamera 52 und ist dazu geeignet, die darüber gewonnen Bilddaten zumindest teilweise zu verarbeiten. In einem darauffolgenden zweiten Schritt 120 erfolgt ein Ermitteln von Abmessungen 31 des Bauraums 30 anhand der im ersten Schritt 110 erfassten Bilddaten. In einem anschließenden dritten Schritt 130 erfolgt ein Ermitteln einer Position 26 zumindest einer ersten und einer zweiten Leistungswelle 22, 24 die in den Bauraum 30 hineinragen. Dies erfolgt auch basierend auf den Bilddaten, die im ersten Schritt 110 erfasst sind. In einem darauffolgenden vierten Schritt 140 erfolgt ein Auswählen eines Getriebemodells 11, das korrespondierend zu den Leistungswellen 22, 24 im Bauraum 30 positionierbar, also einbaubar, ist. Das Auswählen im vierten Schritt 140 erfolgt unter anderem basierend auf Getriebedaten 17 aus einer Mehrzahl an Getriebemodellen 11, die in einer Datenbank 60 gespeichert sind. Dazu wird ein Computerprogrammprodukt 70 eingesetzt, das eine Künstliche Intelligenz 65 umfasst. Im Anschluss daran ergibt sich ein Endzustand 200 des Verfahrens 100, in dem zumindest ein geeignetes Getriebemodell 11 auf einer Ausgabeeinheit 54, nämlichen einem Bildschirm 56 des Erfassungsgeräts 50 ausgegeben wird.

## Patentansprüche

1. Verfahren (100) zur Konfiguration eines Getriebes (10), das in einem vorhandenen Bauraum (30) einzubauen ist, umfassend die Schritte:
a) Optisches Erfassen des Bauraums (30) mittels eines Erfassungsgeräts (50);
b) Ermitteln zumindest einer Abmessung (31) des Bauraums (30) ;
c) Ermitteln einer Position (26) zumindest einer ersten und einer zweiten mit dem Getriebe (10) zu verbindenden Leistungswelle (22,24);
d) selbsttätiges Auswählen zumindest eines Getriebemodells (11), das korrespondierend zu den Leistungswellen (22, 24), an den im Schritt c) erfassten Positionen (26) positionierbar ist;
wobei das Auswählen im Schritt d) anhand einer Datenbank (60) erfolgt, in der für eine Mehrzahl an Getriebemodellen (11) jeweils eine Mehrzahl an erzielbaren Anschlussmaßen gespeichert sind.

2. Verfahren (100) nach Anspruch 1, **dadurch gekennzeichnet, dass** der Schritt d) anhand zumindest einer einstellbaren Funktionsangabe (18) des Getriebes (10) durchgeführt wird.

3. Verfahren (100) nach Anspruch 1 oder 2, **dadurch gekennzeichnet, dass** im Schritt d) das zumindest eine Getriebemodell (11) unter Berücksichtigung zumindest einer Montagezusatzkomponente (47) ausgewählt wird.

4. Verfahren (100) nach einem der Ansprüche 1 bis 3, **dadurch gekennzeichnet, dass** im Schritt c) ein Durchmesser (29) der ersten und/oder zweiten Leistungswelle (22,24) und/oder eine Position (26) zumindest eines Fußlochs (28) im Bauraum (30) für das Getriebe (10) ermittelt wird.

5. Verfahren (100) nach Anspruch 4, **dadurch gekennzeichnet, dass** zum Ermitteln des Durchmessers (29) zumindest einer Leistungswelle (22,24) und/oder eines Fußlochs (28) im Bauraum (30) mittels zumindest einer optisch und/oder elektronisch auslesbaren Normteilangabe erfolgt.

6. Verfahren (100) nach einem der Ansprüche 1 bis 5, **dadurch gekennzeichnet, dass** im Schritt d) das Getriebemodell (11) an einen Benutzer ausgegeben wird, das in zumindest einem Parameter einem vom Benutzer wählbaren Kriterium entspricht.

7. Verfahren (100) nach einem der Ansprüche 1 bis 6, **dadurch gekennzeichnet, dass** die Getriebemodelle (11) in der Datenbank (60) zumindest einen parametrisierten Achsabstand (37) und/oder einen parametrisierten Durchmesser (39) der ersten und/oder zweiten Leistungswelle (22,24) aufweisen.

8. Verfahren (100) nach einem der Ansprüche 1 bis 7, **dadurch gekennzeichnet, dass** zumindest die Schritte a) und b) mittels des Erfassungsgeräts (50) durchgeführt werden und/oder der Schritt d) mittels einer übergeordneten Auswertungseinheit (40) durchgeführt wird.

9. Verfahren (100) nach einem der Ansprüche 1 bis 8, **dadurch gekennzeichnet, dass** der Schritt c) mittels des Erfassungsgeräts (50) oder mittels der übergeordneten Auswertungseinheit (40) durchgeführt wird.

10. Verfahren (100) nach einem der Anspruch 1 bis 9, **da- durch gekennzeichnet**, dass der Schritt d) mittels einer Künstlichen Intelligenz (65) durchgeführt wird.

11. Computerprogrammprodukt (70) zum Auswählen eines Getriebemodells (11) aus einer Datenbank (60), das zu einem Empfangen und Verarbeiten von Bilddaten ausgebildet ist und zum Ausgeben des ausgewählten Getriebemodells (11) ausgebildet ist, **dadurch gekennzeichnet, dass** das Computerprogrammprodukt (70) zum Durchführen eines Verfahrens (100) nach einem der Ansprüche 1 bis 10 ausgebildet ist.

12. Erfassungsgerät (50) zum optischen Erfassen eines Bauraums (30) für ein Getriebe (10), **dadurch gekennzeichnet, dass** das Erfassungsgerät (50) zum zumindest teilweisen Durchführen eines Verfahrens (100) nach einem der Ansprüche 1 bis 10 ausgebildet ist.

13. System (80) zum Konfigurieren eines Getriebes (10), umfassend ein Erfassungsgerät (50), das zu einem optischen Erfassen eines Bauraums (30) für das Getriebe (10) ausgebildet ist, und über eine Datenverbindung (45) mit einer übergeordneten Auswertungseinheit (42) verbunden ist, **dadurch gekennzeichnet, dass** das System (80) zum Durchführen eines Verfahrens (100) nach einem der Ansprüche 1 bis 10 ausgebildet ist.
